# EUROPÄISCHE PATENTSCHRIFT

(11) **EP 3 041 716 B1**
(45) Veröffentlichungstag und Bekanntmachung des Hinweises auf die Patenterteilung: **06.09.2017**
(21) Anmeldenummer: 14749718.4
(22) Anmeldetag: 29.07.2014
(51) Int. Cl.: B60R 25/24, B60R 25/04

(54) **KRAFTFAHRZEUG MIT DRAHTLOSEM SCHLÜSSEL**
MOTOR VEHICLE WITH REMOTE ENTRY KEY
VÉHICUE À MOTEUR AVEC CLÉ MAINS-LIBRES

(30) Priorität: 06.09.2013 DE 102013014890
(43) Veröffentlichungstag der Anmeldung: 13.07.2016
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2014/002071
(87) Internationale Veröffentlichungsnummer: WO 2015/032460

(56) Entgegenhaltungen:
- EP-A1- 1 201 514
- EP-A1- 1 533 450
- EP-A2- 1 346 888
- EP-B1- 1 046 557
- DE-A1-102005 035 934
- DE-A1-102010 034 977
- US-A1- 2005 020 212
- US-A1- 2006 022 795

## Beschreibung

Die Erfindung betrifft ein Verfahren zum Betrieb eines Kraftfahrzeugs mit einer ersten, über Funkwellen arbeitenden Detektionseinrichtung für einen drahtlosen Schlüssel und einer zweiten, einen kleineren Detektionsbereich als die erste Detektionseinrichtung aufweisenden Detektionseinrichtung für den Schlüssel, wobei nach Betätigung eines Bedienelements zum An- und/oder Abschalten des Kraftfahrzeugs ein Suchvorgang über die erste Detektionseinrichtung durchgeführt wird und dann, wenn kein dem Kraftfahrzeug zugeordneter Schlüssel durch die erste Detektionseinrichtung aufgefunden wurde, ab einem Rückfallzeitpunkt ein Suchvorgang über die zweite Detektionseinrichtung durchgeführt wird. Daneben betrifft die Erfindung ein Kraftfahrzeug.

Im Stand der Technik sind bereits Fahrzeugsysteme vorgeschlagen worden, die ein Entriegeln des Kraftfahrzeugs ohne Benutzung eines Schlüssels und/oder ein Starten des Kraftfahrzeugs ohne Benutzung eines Schlüssels erlauben. In diesem Fall wird ein dem Kraftfahrzeug zugeordneter drahtloser Schlüssel verwendet, den der Fahrer bzw. die das Kraftfahrzeug verriegelnde und/oder entriegelnde Person, gegebenenfalls auch ein Beifahrer, derart mit sich führt, dass der Schlüssel von dem Kraftfahrzeug detektierbar ist. Die grundlegende Detektion erfolgt dabei drahtlos über Funksignale, wobei ein derartiger Schlüssel beispielsweise einen Chip, bevorzugt einen RFID-Chip, umfassen kann.

Soll das Vorhandensein des dem Kraftfahrzeug zugeordneten Schlüssels detektiert werden, beispielsweise weil ein Bedienelement zum Starten des Kraftfahrzeugs betätigt wurde, wird eine erste Detektionseinrichtung aktiv, beispielsweise angesteuert durch ein Steuergerät des Kraftfahrzeugs. Die erste Detektionseinrichtung nutzt Funksignale, die das gesamte Kraftfahrzeug abdecken, gegebenenfalls auch einen Bereich außerhalb des Kraftfahrzeugs. Zudem ist es für manche Anwendungen gewünscht, auch eine Ortsangabe zur Position des drahtlosen Schlüssels zu erhalten.

Eine erste Detektionseinrichtung kann mehrere im Kraftfahrzeug verbaute Sendeeinrichtungen umfassen, die auf einer ersten Frequenz bzw. in einem ersten Frequenzband ein Anfragesignal aussenden, das von dem Schlüssel empfangen wird, wobei das Anfragesignal auch die Energie zum Betrieb des Schlüssels enthalten kann. Ansonsten kann in dem drahtlosen Schlüssel auch eine Batterie oder ein sonstiger Energiespeicher vorgesehen sein. Nach dem Aussenden des Anfragesignals wird ein Empfangsmodus aktiviert, in dem mehrere über das Kraftfahrzeug verteilte Empfangseinrichtungen, die den Sendeeinrichtungen entsprechen können (Sende-Empfangseinrichtungen), auf ein Identifikationssignal des Schlüssels als Antwortsignal warten.

Empfängt der Schlüssel bzw. der im Schlüssel vorhandene Transponder das Anfragesignal, kann vorgesehen sein, dass es dekodiert und mit einer neuen Kodierung in einem anderen Frequenzband wieder ausgegeben wird. Beispielsweise kann das Anfragesignal auf einer LF-Frequenz im Bereich von 20 kHz aussendet werden, während das als Identifikationssignal dienende Antwortsignal im HF-Bereich oder im UHF-Bereich liegen kann. Die Empfangseinrichtungen empfangen das als Identifikationssignal dienende Antwortsignal und leiten es dem Steuergerät weiter, welches überprüft, ob das empfangene, kodierte Identifikationssignal, welches durch die Kodierung mithin eine Identifikationsinformation enthält, korrekt kodiert ist, mithin von dem dem Kraftfahrzeug zugeordneten Schlüssel ausgesandt wurde. Trifft die Überprüfung zu, wurde ein dem Kraftfahrzeug zugeordneter Schlüssel drahtlos detektiert (mithin ein Schlüssel detektiert und authentifiziert) und es kann beispielsweise eine Entriegelung bzw. ein Starten des Kraftfahrzeugs erfolgen.

Dabei hat die Verwendung mehrerer Empfangseinrichtungen den Vorteil, dass auch festgestellt werden kann, in welchem Bereich sich der Schlüssel befindet, beispielsweise über die Laufzeitdifferenzen und/oder durch Auswertung von Signalstärken und dergleichen. So kann beispielsweise festgestellt werden, ob sich der Schlüssel im Inneren des Kraftfahrzeugs oder außerhalb des Kraftfahrzeugs befindet.

Wird bei Betätigung eines Bedienelements zum An- und/oder Abschalten des Kraftfahrzeugs durch den Suchvorgang über die erste Detektionseinrichtung kein dem Kraftfahrzeug zugeordneter Schlüssel detektiert, kann dies verschiedene Ursachen haben. Beispielsweise ist ein kurzzeitiger Störer in der Funkkommunikation (HF oder LF) möglich. Auch ist es denkbar, dass sich der Schlüssel noch nicht im Kraftfahrzeug befindet, wenn beispielsweise der Beifahrer, der den Schlüssel bei sich trägt, noch nicht eingestiegen ist. Eine dritte Möglichkeit ist, dass der dem Transponder des Schlüssels zugeordnete Energiespeicher, beispielsweise eine Batterie, leer ist. Schließlich ist auch ein Systemfehler denkbar. Um nun dennoch zu erlauben, das Kraftfahrzeug zu aktivieren, wurde als Rückfalllösung die Verwendung einer zweiten Detektionseinrichtung vorgeschlagen, die auf einem anderen drahtlosen Prinzip basiert. Wird mithin der dem Kraftfahrzeug zugeordnete Schlüssel über die erste Detektionseinrichtung nicht aufgefunden, wird ein Hinweis zur Benutzung der zweiten Detektionseinrichtung an den Bediener ausgegeben und die zweite Detektionseinrichtung wird aktiviert. Die zweite Detektionseinrichtung basiert dabei meist auf einem deutlich kleineren Detektionsbereich als die erste Detektionseinrichtung. Beispielsweise kann die zweite Detektionseinrichtung eine einen zweiten Transponder des Schlüssen anregenden Transponderspule umfassen und/oder als eine NFC-Einrichtung (near field communication) ausgebildet sein, mithin eine Reichweite von 10 cm oder weniger aufweisen. Der zweiten Detektionseinrichtung wird dann eine Fläche im Innenraum des Kraftfahrzeugs zugeordnet, wobei der Fahrer über den Hinweis informiert wird, dass der drahtlose Schlüssel nun an diese Fläche in dem Detektionsbereich der zweiten Detektionseinrichtung zu führen ist. Beispielsweise ist es denkbar, dass hinter einer Abdeckung eine Transponderspule der zweiten Detektionseinrichtung angeordnet ist. Nun wird mithin versucht, den dem Kraftfahrzeug zugeordneten Schlüssel über die zweite Detektionseinrichtung aufzufinden und zu authentisieren. Es wird mithin fest auf ein Suchvorgang über die zweite Detektionseinrichtung umgeschaltet. Der Schlüssel kann mit einem zweiten Transponder versehen sein, der der zweiten Detektionseinrichtung zugeordnet ist, oder der der ersten Detektionseinrichtung zugeordnete erste Transponder des Schlüssels kann auch der zweiten Detektionseinrichtung zugeordnet sein. Wird der dem Kraftfahrzeug zugeordnete Schlüssel über die zweite Detektionseinrichtung aufgefunden, wird das Kraftfahrzeug eingeschaltet.

Dabei ist nachteilhaft, dass der Bediener zwingend den drahtlosen Schlüssel in den Detektionsbereich der zweiten Detektionseinrichtung einbringen muss, um das Kraftfahrzeug zu detektieren, selbst wenn nur eine kurzzeitige Störung vorliegt oder das Bedienelement einfach zu früh betätigt wurde.

US 2006/0022795 A1 betrifft ein Fahrzeugsteuersystem und ein entsprechendes Verfahren, bei dem Backup-Kommunikation automatisch ausgeführt wird, wenn nach einer Anfrage in einem größeren Sendebereich keine "smart ID" zurückerhalten wurde. Immer dann, wenn keine "smart ID" zurückerhalten wurde oder eine falsche "smart ID" empfangen wurde, wird auf die Backup-Kommunikation umgeschaltet, so lange eine vorbestimmte Zeitspanne nicht abgelaufen ist. Wenn durch die Backup-Kommunikation eine "immobilzer ID" empfangen wurde, die falsch ist, wird wieder die erste Art der Kommunikation (smart-Kommunikation) verwendet, denn ersichtlich liegt ja lediglich der falsche Schlüssel vor. Nach Ablauf der vorbestimmten Zeitspanne wird die Kommunikation gänzlich beendet.

Der Erfindung liegt daher die Aufgabe zugrunde, ein im Komfort für den Fahrer und zur Fehlerdetektion besser geeignetes Verfahren zum Suchen eines dem Kraftfahrzeug zugeordneten drahtlosen Schlüssels anzugeben.

Zur Lösung dieser Aufgabe sind bei einem Verfahren der eingangs genannten Art erfindungsgemäß die Merkmale des Anspruchs 1 vorgesehen.

Das bedeutet, im Gegensatz zum Stand der Technik wird nicht die erste Detektionseinrichtung vollständig deaktiviert, sondern parallel zu bzw. zwischen Suchvorgängen der zweiten Detektionseinrichtung weiterhin betrieben, so dass der Bediener nicht zwangsläufig den drahtlosen Schlüssel in den Detektionsbereich der zweiten Detektionseinrichtung einbringen muss, wenn ein vorübergehender Fehler zur Nichtdetektion des dem Kraftfahrzeug zugeordneten Schlüssels durch die erste Detektionseinrichtung geführt hat. Beispiele für solche kurzzeitigen Fehler sind kurzzeitige Störungen in der Funkkommunikation der ersten Detektionseinrichtung, wobei sowohl das Anfragesignal als auch das als Identifikationssignal dienende Antwortsignal betroffen sein können, ein zu spätes Einbringen des dem Kraftfahrzeug zugeordneten drahtlosen Schlüssels in das Kraftfahrzeug, beispielsweise das verspätete Zusteigen eines Beifahrers, sowie ein vorübergehender Systemfehler. Nachdem die Suchvorgänge parallel oder quasiparallel laufen, muss der Bediener in solchen Fällen also nicht zwangsläufig den Schlüssen in den Detektionsbereich der zweiten Detektionseinrichtung einbringen. Die Suchstrategie adaptiert sich auf den Fahrzeugzustand und bietet den optimalen Komfort.

Als erste Detektionseinrichtung wird dabei, wie eingangs beschrieben, meist eine übliche, über Funksignale arbeitende Detektionseinrichtung mit mehreren Sendeeinrichtungen und Empfangseinrichtungen, bevorzugt kombinierten Sende-Empfangseinrichtungen, verwendet, die ein Anfragesignal in einem ersten Frequenzband aussenden, das durch einen ersten Transponder des Schlüssels empfangen wird, wonach in einem zweiten Frequenzband ein als Identifikationssignal dienendes Antwortsignal ausgegeben und von den Sende-Empfangseinrichtungen der ersten Detektionseinrichtung wieder empfangen wird. Dort kann dann beispielsweise die Kodierung des Identifikationssignals überprüft werden, um festzustellen, ob es sich um einen dem Kraftfahrzeug zugeordneten Schlüssel handelt. Der Detektionsbereich der ersten Detektionseinrichtung erstreckt sich dabei bevorzugt über den gesamten Innenraum des Kraftfahrzeugs. Die zweite Detektionseinrichtung spricht einen zweiten Transponder des Schlüssels an, der auch in Baueinheit mit dem ersten Transponder realisiert sein kann. Allgemein hat die zweite Detektionseinrichtung einen deutlich kleineren Detektionsbereich als die erste Detektionseinrichtung, nachdem sie insbesondere darauf abzielt, auch dann ein Antwortsignal zu erhalten, wenn beispielsweise ein dem ersten Transponder zugeordneter Energiespeicher, insbesondere eine Batterie, leer ist.

Die zweite Detektionseinrichtung kann in einer ersten Ausgestaltung eine Transponderspule umfassen, die ein Anregungssignal aussendet, das den zweiten Transponder mit Energie versorgt und dazu anregt, seinerseits ein Antwortsignal zu generieren. Es sind jedoch auch andere Ausgestaltungen der zweiten Detektionseinrichtung denkbar, beispielsweise eine Ausgestaltung als NFC-Einrichtung. In jedem Fall ist der Detektionsbereich der zweiten Detektionseinrichtung deutlich kleiner als der Detektionsbereich der ersten Detektionseinrichtung, wobei insbesondere die zweite Detektionseinrichtung einen Detektionsbereich einer Ausdehnung von 10 cm oder weniger als 10 cm besitzt.

Es sind Ausgestaltungen bekannt, in denen ein Element der ersten Detektionseinrichtung auch als die oder in der zweiten Detektionseinrichtung verwendet wird. Beispielsweise wurde vorgeschlagen, eine Sende-Empfangseinrichtung in der Mittelkonsole eines Kraftfahrzeugs, die der ersten Detektionseinrichtung zugehörig ist, als eine Transponderspule der zweiten Detektionseinrichtung zu verwenden. In einer solchen Ausgestaltung ist es nicht möglich, Suchvorgänge über die erste und die zweite Detektionseinrichtung gleichzeitig durchzuführen, da die entsprechende Sende-Empfangseinrichtung dann doppelt belegt wäre. Für diesen Fall schlägt die vorliegende Erfindung alternierende Suchvorgänge über die erste und die zweite Detektionseinrichtung vor. Sind die erste und die zweite Detektionseinrichtung jedoch unabhängig voneinander betreibbar, bietet sich ein paralleles Durchführen von Suchvorgängen an. Zum Rückfallzeitpunkt wird also die als Rückfallebene vorgesehene zweite Detektionseinrichtung zwar aktiviert und verwendet, jedoch wird zumindest zweitweise auch noch über die erste Detektionseinrichtung gesucht.

Erfindungsgemäß ist vorgesehen, dass nach dem Rückfallzeitpunkt ab einem Umschaltzeitpunkt, zu dem für eine vorbestimmte Zeitspanne oder eine vorbestimmte Zahl von Suchvorgängen kein dem Kraftfahrzeug zugeordneter Schlüssel aufgefunden wurde, nur noch die zweite Detektionseinrichtung für Suchvorgänge verwendet wird. Ist für eine vorbestimmte Zeitspanne bzw. mehrfach hintereinander der dem Kraftfahrzeug zugeordnete Schlüssel nicht über die erste Detektionseinrichtung erkannt worden, ist davon auszugehen, dass ein länger anhaltender Fehler vorliegt, beispielsweise die Batterie des Schlüssels leer ist oder ein Fehler im System vorliegt. In diesem Fall ist es zweckmäßig, fest auf die Suche über die zweite Detektionseinrichtung umzustellen, da nicht mehr davon auszugehen ist, dass über die erste Detektionseinrichtung, deren Detektionsbereich ja das gesamte Kraftfahrzeug abdeckt, ein Erfolg erzielt wird.

Dabei kann als vorbestimmte Zahl 3 bis 6, insbesondere 5, oder als vorbestimmte Zeitspanne 8 bis 12, insbesondere 10 Sekunden, verwendet werden. Die meisten kurzzeitigen Fehler dürften dann bereits beendet sein.

Vorzugsweise wird zum Umschaltzeitpunkt ein Fehlereintrag bezüglich der ersten Detektionseinrichtung in einen Fehlerspeicher geschrieben und/oder eine auf einen möglichen Defekt der ersten Detektionseinrichtung oder eine leere Schlüsselbatterie hinweisende Fehlermeldung ausgegeben. Fehlerspeicher sind im Stand der Technik bereits bekannt und können beispielsweise bei einer Wartung ausgelesen werden, so dass mithin wenigstens bei mehrfachem Auftreten eines Nichtauffindens über die erste Detektionseinrichtung entsprechende Maßnahmen eingeleitet werden können. Zudem kann es auch zweckmäßig sein, einen Hinweis an den Bediener auszugeben, dass über die erste Detektionseinrichtung der Schlüssel nicht aufgefunden werden konnte, dass der Energiespeicher, insbesondere die Batterie, des Schlüssels leer ist und/oder ein anderer Defekt, insbesondere im Bereich der ersten Detektionseinrichtung, vorliegt.

Wie im Stand der Technik grundsätzlich bekannt, ist es auch im Rahmen der vorliegenden Erfindung zweckmäßig, wenn zum Rückfallzeitpunkt ein Hinweis zur Benutzung der zweiten Detektionseinrichtung an den Bediener ausgegeben wird, so dass insbesondere nach einem bestimmten Zeitraum, in dem der Bediener abwartet, ob nicht doch die erste Detektionseinrichtung erfolgreich den dem Kraftfahrzeug zugeordneten Schlüssel detektiert, beispielsweise bei verspätetem Einsteigen eines Beifahrers mit dem drahtlosen Schlüssel, der Schlüssel in den Detektionsbereich der zweiten Detektionseinrichtung einzubringen ist.

Neben dem Verfahren betrifft die vorliegenden Erfindung auch ein Kraftfahrzeug mit einer ersten, über Funkwellen arbeitenden Detektionseinrichtung für einen drahtlosen Schlüssel, einer zweiten, einen kleineren Detektionsbereich als die erste Detektionseinrichtung aufweisenden Detektionseinrichtung für den Schlüssel und einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem die bereits genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: einen Ablaufplan eines Ausführungsbeispiels des erfindungsgemäßen Verfahrens.

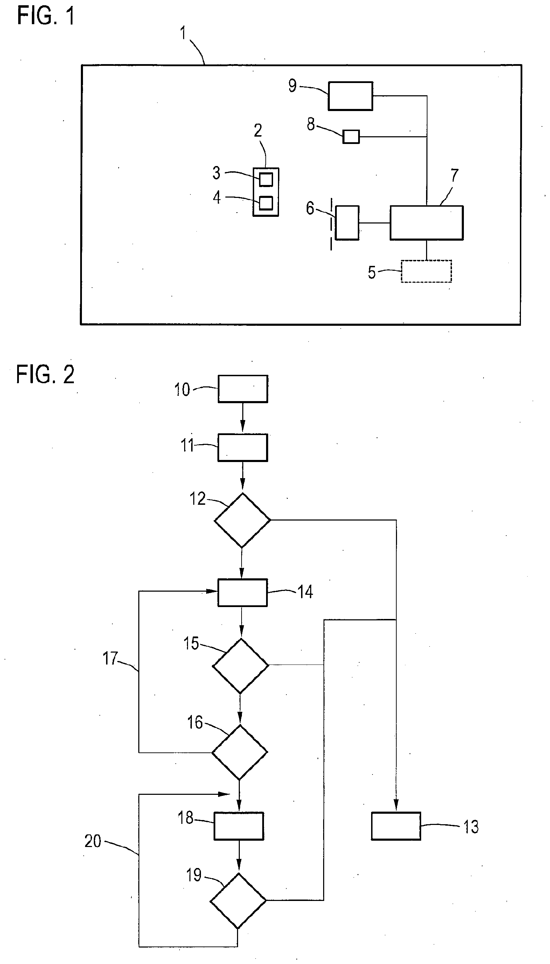

Fig. 1 zeigt eine Prinzipskizze eines erfindungsgemäßen Kraftfahrzeugs 1. Dem Kraftfahrzeug 1 ist ein drahtloser Schlüssel 2 zugeordnet, der nicht mehr explizit benutzt, das bedeutet, in ein Zündschloss oder dergleichen eingesetzt und ggf. gedreht werden muss, um das Kraftfahrzeug 1 zu starten. Vielmehr ist es vollständig ausreichend, wenn eine im Kraftfahrzeug 1 befindliche Person den Schlüssel 2 bei sich trägt, wenn das Kraftfahrzeug 1 gestartet werden soll.

Um den Schlüssel 2 drahtlos detektieren zu können, weist der Schlüssel 2 vorliegend einen ersten Transponder 3 und einen zweiten Transponder 4 auf, wobei der erste und der zweite Transponder 3, 4 auch ineinander integriert als ein Bauteil realisiert werden können. Bei dem Transponder 4 handelt es sich um eine Art Notfalltransponder, das bedeutet, er wird als Rückfalllösung verwendet, wenn eine Detektion über den ersten Transponder 3 nicht möglich ist.

Entsprechend weist das Kraftfahrzeug 1 zunächst eine nur schematisch angedeutete erste Detektionseinrichtung 5 auf, die über Funksignale arbeitet. Der Detektionsbereich der ersten Detektionseinrichtung 5 umfasst den gesamten Innenraum des Kraftfahrzeugs 1. Soll der Schlüssel 2 detektiert werden, wird ein Anfragesignal in einem ersten Frequenzband, insbesondere einem LF-Frequenzband, ausgesendet, das vom Transponder 3 empfangen und neu kodiert als Identifikationssignal wieder ausgesendet wird. Die Detektionseinrichtung 5 weist der Übersichtlichkeit hier nicht näher dargestellte Sende-Empfangseinrichtungen auf, die über das Kraftfahrzeug 1 verteilt sind und mithin das von dem ersten Transponder 3 ausgesendete Identifikationssignal wieder empfangen können. Nach einer Auswertung, beispielsweise über ein dem drahtlosen Schlüsselsystem zugeordnetes Steuergerät 7, kann mithin festgestellt werden, ob es sich bei dem Schlüssel 2 um einen dem Kraftfahrzeug 1 zugeordneten Schlüssel 2 handelt.

Funktioniert die erste Detektionseinrichtung nicht, soll es dennoch möglich sein, beispielsweise das Kraftfahrzeug 1 nach Betätigung eines entsprechenden Bedienelements 8, beispielsweise einer Start-Stopp-Taste, anzuschalten. Daher ist als Rückfallebene, wie bereits angedeutet, eine zweite Detektionseinrichtung 6 vorgesehen, die vorliegend eine hinter einer Abdeckung befindliche Transponderspule in der Mittelkonsole des Kraftfahrzeugs aufweist. Die Transponderspule ist auf den zweiten Transponder 4 abgestimmt, wobei sie in Form eines Anregungssignals auch Energie an den zweiten Transponder 4 überträgt, um dessen Antwortsignal zu ermöglichen. Derartige Transponderspulen sind bereits zur Überprüfung von Schlüsseln aus Zündschlössern grundsätzlich bekannt. Die zweite Detektionseinrichtung 6 weist aufgrund ihres Prinzips einen deutlich kleineren Detektionsbereich auf, beispielsweise im Bereich von bis zu 10 cm. Es ist mithin, damit die zweite Detektionseinrichtung 6 genutzt werden kann, notwendig, den Schlüssel 2 in den Detektionsbereich der zweiten Detektionseinrichtung 6 einzubringen, beispielsweise an die in Fig. 1 angedeutete Abdeckung zu halten.

Das Steuergerät 7 ist zur Durchführung des erfindungsgemäßen Verfahrens ausgebildet und kann daher die erste Detektionseinrichtung 5 und die zweite Detektionseinrichtung 6 zur Durchführung von Suchvorgängen ansteuern, wenn das Bedienelement 8, beispielsweise zum Starten des Kraftfahrzeugs 1, betätigt wurde. Zudem hat das Steuergerät 7 Zugriff auf eine Anzeigeeinrichtung 9, um Hinweise zur Benutzung der zweiten Detektionseinrichtung 6 und/oder Fehlermeldungen auszugeben.

Ein Ausführungsbeispiel des erfindungsgemäßen Verfahrens, wie es durch das Steuergerät 7 durchgeführt werden kann, ist im Ablaufdiagramm der Fig. 2 näher dargestellt. Das erfindungsgemäße Verfahren beginnt in einem ersten Schritt 10, in dem festgestellt wurde, dass das Bedienelement 8 betätigt wurde, beispielsweise als Start-Taste gedrückt wurde. In einem Schritt 11 erfolgt sodann ein Suchvorgang über die Detektionseinrichtung 5, wie beschrieben wurde.

In einem Schritt 12 wird dann überprüft, ob ein dem Kraftfahrzeug 1 zugeordneter Schlüssel 2 im Kraftfahrzeug 1 aufgefunden wurde. Ist dies der Fall, wird mit Schritt 13 fortgefahren und das Kraftfahrzeug 1 wird angeschaltet.

Wurde jedoch in Schritt 12 kein dem Kraftfahrzeug zugeordneter Schlüssel 2 detektiert, ist eine Rückfallbedingung eingetreten, die die Verwendung der zweiten Detektionseinrichtung 6 als Rückfallebene rechtfertigt. Es wird mithin zu einem Rückfallzeitpunkt in einen zweiten Betriebsmodus geschaltet, in dem vorliegend parallel Suchvorgänge über die erste Detektionseinrichtung 5 und die zweite Detektionseinrichtung 6 durchgeführt werden. Sollte es die Ausgestaltung der ersten Detektionseinrichtung 5 und der zweiten Detektionseinrichtung 6, beispielsweise von beiden Detektionseinrichtungen 5, 6 benutzte Elemente, unmöglich machen, Suchvorgänge mit beiden Detektionseinrichtungen 5, 6 parallel durchzuführen, werden alternierend Suchvorgänge mit der ersten Detektionseinrichtung 5 und der zweiten Detektionseinrichtung 6 durchgeführt.

In einem Schritt 15 wird erneut überprüft, ob ein dem Kraftfahrzeug 1 zugeordneter drahtloser Schlüssel 2 mit einer der beiden Detektionseinrichtungen 5, 6 aufgefunden wurde. Ist dies der Fall, wird wiederum mit Schritt 13 fortgefahren: das Kraftfahrzeug 1 wird angeschaltet.

Wird jedoch wiederum kein dem Kraftfahrzeug 1 zugeordneter Schlüssel 2 detektiert, wird mit Schritt 16 fortgefahren, wo geprüft wird, ob eine Umschaltbedingung in einen dritten Betriebsmodus gegeben ist. Vorliegend wird überprüft, ob bereits viermal versucht wurde, den Schlüssel 2 mit der ersten Detektionseinrichtung 5 zu detektieren. Ist die Umschaltbedingung noch nicht erfüllt, wird wieder mit Schritt 14 fortgefahren, das bedeutet es erfolgt parallel oder alternierend ein Suchvorgang über beide Detektionseinrichtungen 5, 6, vgl. Pfeil 17.

Ist die Umschaltbedingung jedoch erfüllt, wird ein dritter Betriebsmodus aktiviert, in dem die Suche nach dem Schlüssel 2 nur über die zweite Detektionseinrichtung 6 erfolgt, nachdem von einem längerfristig bestehenden Fehler bezüglich der ersten Detektionseinrichtung 5 ausgegangen werden muss, beispielsweise einer leeren Batterie des Schlüssels 2 oder gar einem Systemfehler. Es ist möglich, dass diesbezüglich ein Eintrag in einen Fehlerspeicher vorgenommen wird und/oder eine Fehlermeldung über die Anzeigeeinrichtung 9 ausgegeben wird.

Im Schritt 19 wird wiederum überprüft, ob, in diesem Fall nur noch über die zweite Detektionseinrichtung 6, ein dem Kraftfahrzeug 1 zugeordneter Schlüssel 2 detektiert wurde. Ist dies der Fall, wird mit Schritt 13 fortgefahren, ansonsten wird ein weiterer Suchvorgang über die zweite Detektionseinrichtung 6 gestartet, Pfeil 20.

Es sei an dieser Stelle noch angemerkt, dass mit Aktivierung des zweiten Betriebsmodus, das bedeutet der parallelen Suche über die erste und die zweite Detektionseinrichtung 5, 6, auch ein entsprechender Hinweis über die Anzeigeeinrichtung 9 ausgegeben wird, dass der Schlüssel 2 in den Detektionsbereich der zweiten Detektionseinrichtung 6 einzubringen ist.

## Patentansprüche

1. Verfahren zum Betrieb eines Kraftfahrzeugs (1) mit einer ersten, über Funkwellen arbeitenden Detektionseinrichtung (5) für einen drahtlosen Schlüssel (2) und einer zweiten, einen kleineren Detektionsbereich als die erste Detektionseinrichtung (5) aufweisenden Detektionseinrichtung (6) für den Schlüssel (2), wobei nach Betätigung eines Bedienelements (8) zum An- und/oder Abschalten des Kraftfahrzeugs (1) ein Suchvorgang über die erste Detektionseinrichtung (5) durchgeführt wird und dann, wenn kein dem Kraftfahrzeug (1) zugeordneter Schlüssel (2) durch die erste Detektionseinrichtung (5) aufgefunden wurde, ab einem Rückfallzeitpunkt ein Suchvorgang über die zweite Detektionseinrichtung (6) durchgeführt wird, wobei ab dem Rückfallzeitpunkt die erste und die zweite Detektionseinrichtung (5, 6) zumindest zeitweise parallel oder alternierend einen Suchvorgang durchführen,
**dadurch gekennzeichnet,**
**dass** nach dem Rückfallzeitpunkt ab einem Umschaltzeitpunkt, zu dem für eine vorbestimmte Zeitspanne oder eine vorbestimmte Zahl von Suchvorgängen kein dem Kraftfahrzeug (1) zugeordneter Schlüssel (2) aufgefunden wurde, nur noch die zweite Detektionseinrichtung (6) für Suchvorgänge verwendet wird.

2. Verfahren nach Anspruch 1,
**dadurch gekennzeichnet,**
**dass** als vorbestimmte Zahl 3 bis 6, insbesondere 5, oder als vorbestimmte Zeitspanne 8 bis 12, insbesondere 10, Sekunden verwendet werden.

3. Verfahren nach Anspruch 1 oder 2,
**dadurch gekennzeichnet,**
**dass** zum Umschaltzeitpunkt ein Fehlereintrag bezüglich der ersten Detektionseinrichtung (5) in einen Fehlerspeicher geschrieben wird und/oder eine auf einen möglichen Defekt der ersten Detektionseinrichtung (5) oder eine leere Schlüsselbatterie hinweisende Fehlermeldung ausgegeben wird.

4. Verfahren nach einem der vorangehenden Ansprüche,
**dadurch gekennzeichnet,**
**dass** zum Rückfallzeitpunkt ein Hinweis zur Benutzung der zweiten Detektionseinrichtung (6) an den Bediener ausgegeben wird.

5. Kraftfahrzeug (1) mit einer ersten, über Funkwellen arbeitenden Detektionseinrichtung (5) für einen drahtlosen Schlüssel (2), einer zweiten, einen kleineren Detektionsbereich als die erste Detektionseinrichtung (5) aufweisenden Detektionseinrichtung (6) für den Schlüssel (2) und einem zur Ausführung eines Verfahrens nach einem der vorangehenden Ansprüche ausgebildeten Steuergerät (7).

## Claims

1. Method for operating a motor vehicle (1) having a first detection device (5) for a wireless key (2) operating via radio waves and a second detection device (6) for the key (2) comprising a smaller detection range than the first detection device (5), wherein after actuating an operating element (8) to turn on and turn off the motor vehicle (1), a search process is carried out via the first detection device (5) and then, if a key (2) assigned to the motor vehicle (1) has not been found by the first detection device (5), a search process is carried out via the second detection device (6) from a release time wherein from said release time the first and the second detection device (5, 6) carry out a search process at least for some time in a parallel or alternating manner,
**characterised in that**
after the release time from a switchover time at which no key (2) assigned to the motor vehicle (1) has been found for a predetermined time period or a predetermined number of search processes, only the second detection device (6) is used for search processes.

2. Method according to claim 1,
**characterised in that**
3 to 6, in particular 5 are used as the predetermined number or 8 to 12, in particular 10 seconds are used as the predetermined time period.

3. Method according to claim 1 or 2,
**characterised in that**
at the switchover time an error entry is written into an error memory with regard to the first detection device (5) and/or an error notification indicating a possible defect of the first detection device (5) or an empty key battery is issued.

4. Method according to any one of the preceding claims,
**characterised in that**
at the release time, an indication to use the second detection device (6) is issued to the operator.

5. Motor vehicle (1) having a first detection device (5) for a wireless key (2) operating via radio waves, a second detection device (6) for the key (2) comprising a smaller detection range than the first detection device (5) and having a control device (7) configured to carry out the method according to any one of the preceding claims.

## Revendications

1. Procédé servant à faire fonctionner un véhicule automobile (1) comprenant un premier dispositif de détection (5) fonctionnant par l'intermédiaire d'ondes radio pour une clé (2) sans fil et un deuxième dispositif de détection (6) pour la clé (2) présentant une zone de détection plus petite que le premier dispositif de détection (5), dans lequel une opération de recherche est effectuée par l'intermédiaire du premier dispositif de détection (5) après l'actionnement d'un élément de commande (8) servant à démarrer et/ou arrêter le véhicule automobile (1) puis une opération de recherche est effectuée par l'intermédiaire du deuxième système de détection (6) à partir d'un moment de récidive quand aucune clé (2) associée au véhicule automobile (1) n'est trouvée par le premier dispositif de détection (5), dans lequel le premier et le deuxième dispositif de détection (5, 6) effectuent, à partir du moment de récidive, au moins par intermittence, en parallèle ou en alternance, une opération de recherche,
**caractérisé en ce**
**qu'**après le moment de récidive, à partir d'un moment de commutation, auquel aucune clé (2) associée au véhicule automobile (1) n'a été trouvée pour un laps de temps prédéfini ou pour un nombre prédéfini d'opérations de recherche, seul le deuxième dispositif de détection (6) est encore utilisé pour des opérations de recherche.

2. Procédé selon la revendication 1,
**caractérisé en ce**
**que** sont utilisées, en tant que nombre prédéfini, 3 à 6, en particulier 5 ou, en tant que laps de temps prédéfini, 8 à 12, en particulier 10 secondes.

3. Procédé selon la revendication 1 ou 2,
**caractérisé en ce**
**qu'**au moment de commutation, une entrée d'erreur relative au premier dispositif de détection (5) est inscrite dans une mémoire d'erreur, et/ou un message d'erreur pointant un éventuel défaut du premier dispositif de détection (5) ou une batterie de clé vide est émis.

4. Procédé selon l'une quelconque des revendications précédentes,
**caractérisé en ce**
**qu'**au moment de récidive une information concernant l'utilisation du deuxième dispositif de détection (6) est émise à l'attention de l'utilisateur.

5. Véhicule automobile (1) comprenant un premier dispositif de détection (5) fonctionnant par l'intermédiaire d'ondes radio pour une clé (2) sans fil, un deuxième dispositif de détection (6) pour la clé (2) présentant une zone de détection plus petite que le premier dispositif de détection (5) et un appareil de commande (7) réalisé afin d'exécuter un procédé selon l'une quelconque des revendications précédentes.
